# EUROPÄISCHE PATENTANMELDUNG

(11) **EP 4 603 523 A1**
(43) Veröffentlichungstag der Anmeldung: **20.08.2025**
(21) Anmeldenummer: 24157448.2
(22) Anmeldetag: 13.02.2024
(51) Int. Cl.: C08G 18/12, C08G 18/48, C08G 18/67, C08G 18/73, C09J 175/08

(54) **VERFAHREN ZUR HERSTELLUNG EINES ISOCYANAT-TERMINIERTEN PRÄPOLYMERS**

(71) Anmelder: Covestro Deutschland AG, 51373 Leverkusen (DE)
(72) Erfinder: Weiser, Marc-Stephan, 51515 Kürten-Dürscheid (DE); Doerr, Sebastian, 40593 Düsseldorf (DE); Plug, Sascha, 51375 Leverkusen (DE); Suetterlin, Jan, 51061 Köln (DE)
(74) Vertreter: Levpat

(57) **Zusammenfassung**

Die vorliegende Erfindung betrifft ein Isocyanat-terminiertes Präpolymer erhältlich nach dem erfindungsgemäßen Verfahren sowie die Verwendung des Präpolymers erhalten nach dem erfindungsgemäßen Verfahren oder des nach dem erfindungsgemäßen Verfahren erhältlichen Präpolymers zur Herstellung eines Adhäsivfilms oder eines Formkörpers. Auch das Verfahren zur Herstellung des Adhäsivfilms und der nach diesem Verfahren erhältliche Adhäsivfilm sind Gegenstand der Erfindung.

## Beschreibung

Die vorliegende Erfindung betrifft ein Isocyanat-terminiertes Präpolymer erhältlich nach dem erfindungsgemäßen Verfahren sowie die Verwendung des Präpolymers erhalten nach dem erfindungsgemäßen Verfahren oder des nach dem erfindungsgemäßen Verfahren erhältlichen Präpolymers zur Herstellung eines Adhäsivfilms oder eines Formkörpers. Auch das Verfahren zur Herstellung des Adhäsivfilms und der nach diesem Verfahren erhältliche Adhäsivfilm sind Gegenstand der Erfindung.

In EP0147588A1 werden selbsthaftende Flächengebilde, bestehend aus mindestens einer Trägerschicht und mindestens einer Haftschicht auf Basis von Polyurethan-Gel offenbart. Die Flächengebilde können durch Beschichtung von verschiedenartigsten Trägermaterialien mit einem Reaktionsgemisch, das aus Di- und/oder Polyisocyanaten und einer überschüssigen Menge an höhermolekularen Polyolen besteht, und dessen nachfolgender Härtung erhalten werden und z.B. als hautverträgliches Heftpflaster für medizinische Zwecke oder als Haftkleber für technische Einsätze Verwendung finden.

Die EP2436380 A1 beschreibt ein Pflastermaterial, das hauptsächlich auf den Wundbereich der Haut aufgebracht wird, wobei das Pflastermaterial, das ein Trägermaterial mit einer Wasserdampfdurchlässigkeit von mindestens 3.000 g/m²·Tag und eine Polyurethan-basierte Klebeschicht mit einer Wasserdampfdurchlässigkeit von 5.000 g/m² umfasst.

In WO9743328A1 werden hydrophile Polyurethan-Gelmassen und Schäume hieraus, die Verwendung der Polyurethan-Gelmassen für druckverteilende insbesondere selbsthaftende Polyurethan-(Schaum-) Gele hieraus sowie die Verwendung der Polyurethangelmassen für selbstklebende und druckverteilende Materialien und Haftklebeschichten beschrieben.

Es existieren bereits hautfreundliche, atmungsaktive Klebstoffe für Anwendungen auf der Haut im Markt. Diese wurden aber dahingehend entwickelt, dass sie auf frische Wunden geklebt werden können und daher im Feuchten keine gute bis gar keine Klebkraft haben. Sie sind besonders für bettlägrige Patienten oder Patienten mit besonders empfindlicher Haut geeignet, die keine besonders hohe Mobilität haben (kein Sport, Workout, Saunagänge etc.), bei denen es also nicht zu hoher Schweißproduktion oder häufigem Baden/ Duschen kommt, was den Klebstoff in der Tragezeit limitiert. Die genannten Klebstoffe können nur schlecht in solchen Umständen lange getragen werden, da durch die gewünschte Feuchtigkeitsempfindlichkeit (kein Kleben auf Wunden) im Falle stärkerer Schweißentwicklung oder intensiven Duschens, Badens die Klebstoffe ihre Klebkraft verlieren und sich von der Haut lösen. Gleichzeitig werden genannte Klebstoffe, die alle Zweikomponentensysteme sind, in einem stark asymmetrischen Mischungsverhältnis (nach Gewichtsanteilen ca. 9:1 bis 11:1) hergestellt, was besondere Anforderungen an die Genauigkeit der zu verwendeten Dosiereinrichtungen sowie die verwendeten Pumpen und Ventile am Mischer stellt, um Rückschlag der Hauptkomponente in die Leitung der Minderkomponente (aufgrund des höheren Drucks) und Mischfehler zu vermeiden.

Weiterhin ist eine homogene Durchmischung bei derartig asymmetrischen Mischungsverhältnissen schwierig. Dies erfordert aufwändige Mischer mit langen Mischstrecken, was zu einem hohen Reinigungsbedarf der Mischer führen kann.

Aufgabe der vorliegenden Anmeldung war es, ein verbessertes Verfahren zur Herstellung von Plastermaterialien auf Basis eines Polyurethan-basierten Adhäsivfilms bereitzustellen, wobei der Adhäsivfilm neben einer hohen Atmungsaktivität und langer Tragezeit eine gegenüber vorbeschriebenen Polyurethan-basierten Adhäsivfilmen verbesserte Haftung im Nasszustand aufweist. Hierbei soll die für die Herstellung des Adhäsivfilms verwendete Polyol bzw. im speziellen die Isocyanat (Präpolymer)-Komponente über ein gegenüber dem Stand der Technik vergleichbar einfaches Verfahren herstellbar sein.

Überraschenderweise wurde nun gefunden, dass ein Verfahren zur Herstellung eines Isocyanat-terminierten Präpolymers (A) umfassend der Umsetzung einer Isocyanatgruppen-reaktiven Verbindung (B) mit einem Polyisocyanat (C) und einer Komponente (D), wobei die Komponente (D) ein C-C Doppelbindungshaltiger Monoalkohol mit mindestens 8, bevorzugt mindestens 10 und besonders bevorzugt mindestens 12 Kohlenstoffatomen im Molekül ist, die oben genannten Aufgaben löst.

Gegenstand der Erfindung ist ebenfalls ein Isocyanat-terminiertes Präpolymer (A) erhältlich nach dem erfindungsgemäßen Verfahren sowie die Verwendung des Präpolymers (A) erhalten nach dem erfindungsgemäeßn Verfahren oder des nach dem erfindungsgemäßen Verfahren erhältlichen Präpolymers (A) zur Herstellung eines Adhäsivfilms (H) oder eines Formkörpers.

Die Erfindung wird nachfolgend ausgeführt, wobei die erfindungsgemäßen Ausführungsformen beliebig miteinander kombiniert werden können, insofern sich aus dem technischen Kontext nicht das Gegenteil ergibt.

### Präpolymer (A)

In einer Ausführung der Erfindung hat das Isocyanat-terminierte Präpolymer (A) einen C-C Doppelbindungsgehalt von 0,2 Gew.-% bis 3,9 Gew.-%, bevorzugt von 0,5 Gew.-% bis 3,4 Gew.-% und besonders bevorzugt von 1,0 Gew.-% bis 2,9 Gew.-%, wobei der Gewichtsanteil des Doppelbindungsgehalts das Verhältnis der -CH=CH- Doppelbindungseinhei(ten) (26 g/mol) bezogen auf das Molekülgewicht des Präpolymers (A) ist und mittels der dem Fachmann bekannten Protonen-Resonanzspektroskopie experimentell ermittelt werden kann.

In einer Ausführung der Erfindung hat das Isocyanat-terminierte Präpolymer (A) einen Isocyanatanteil von 1 Gew.-% bis 30 Gew.-%, bevorzugt von 5 Gew.-% bis 25 Gew.-%., besonders bevorzugt 7 Gew.-% bis 20 Gew.-%.

In einer Ausführung der Erfindung hat das Isocyanat-terminierte Präpolymer (A) eine Viskosität von 10 mPa·s bis 5000 mPa·s, bevorzugt von 100 mPa·s bis 2000 mPa·s, wobei die Viskosität nach DIN 53019 bei 23°C und einer Scherrate von 50/s bestimmt wurde.

### Isocyanatgruppen-reaktive Verbindung (B)

In einer Ausfuhrungsform des erfindungsgemäßen Verfahrens ist die Isocyanatgruppen-reaktive Verbindung (B) ein Polyetherpolyol (B-1), ein Polyetheresterpolyol (B-2) und/oder ein Polyesterpolyol (B-3), bevorzugt ein Polyetherpolyol (B-1).

In einer Ausfuhrungsform des erfindungsgemäßen Verfahrens weist die Isocyanatgruppen-reaktive Verbindung (B), bevorzugt das Polyetherpolyol (B-1) eine berechnete Funktionalität von 2 bis 8, bevorzugt von 2 bis 6 und besonders bevorzugt von 2 bis 4 auf.

In einer Ausfuhrungsform des erfindungsgemäßen Verfahrens ist die Isocyanatgruppen-reaktive Verbindung (B) das Polyetherpolyol (B-1) und das Polyetherpolyol (B-1) ist erhältlich durch Umsetzung einer H-funktionellen Starterverbindung (E) mit einem Alkylenoxid (F) in Gegenwart eines Katalysators (G), bevorzugt eines basischen Katalysators.

In einer Ausfuhrungsform des erfindungsgemäßen Verfahrens hat die Isocyanatgruppen-reaktive Verbindung (B) eine Molmasse von 2 g/mol bis 2500 g/mol, bevorzugt von 50 g/mol bis 1500 g/mol und besonders bevorzugt von 100 g/mol bis 1000 g/mol wobei die Molmasse mittels der Experimentalteil offenbarten Methode bestimmt wurde.

### Polyisocyanat (C)

In einer Ausfuhrungsform des erfindungsgemäßen Verfahrens ist das Polyiscyanat (C) mindestens eine Verbindung mit einer Molmasse von 140 g/mol bis 600 g/mol enthaltend aliphatische, cycloaliphatische, araliphatische und/oder aromatisch gebundene Isocyanatgruppen.

In einer bevorzugten Ausfuhrungsform des erfindungsgemäßen Verfahrens ist das Polyisocyanat (C) eine oder mehrere Verbindungen und wird ausgewählt aus der Gruppe bestehend aus 1,5-Diisocyanatopentan (Pentamethylendiisocyanat, PDI), 1,6-Diisocyanatohexan (Hexamethylendiisocyanat, HDI), 1-Isocyanato-3,3,5-trimethyl-5-isocyanatomethylcyclohexan (Isophorondiisocyanat, IPDI), 2,4'- and 4,4'-Diisocyanatodicyclohexylmethane (H12-MDI), und 1,3- und 1,4-bis(isocyanatomethyl)benzen (Xylylendiisocyanat, XDI), 1,3- und 1,4-bis(2-isocyanatopropan-2-yl)benzen (tetramethylxylylendiisocyanat, TMXDI), 2,2`-, 2,4'- and 4,4'-Diisocyanatodiphenylmethan (MDI), 3,3'-Dimethyl diphenylmethan-4,4'-diisocyanat, 4,4'-Diisocyanatodiphenylethan, 1,5-Diisocyanatonaphthalene (NDI).

In einer besonders bevorzugten Ausführungsform des erfindungsgemäßen Verfahrens ist das Polyisocyanat (C) 1,5-Diisocyanatopentan (Pentamethylendiisocyanat, PDI) und/oder 1,6-Diisocyanatohexan (Hexamethylendiisocyanat, HDI).

In einer ganz besonders bevorzugten Ausfuhrungsform des erfindungsgemäßen Verfahrens ist das Polyisocyanat (C) 1,6-Diisocyanatohexan (Hexamethylendiisocyanat, HDI).

Polyisocyanate im Sinne der vorliegenden Erfindung sind Verbindungen mit mindestens zwei Isocyanatgruppen. Bevorzugt werden Polyisocyanate mit zwei Isocyanatgruppen verwendet, welche man auch als Diisocyanate bezeichnet.

In einer Ausfiihrungsform des erfindungsgemäßen Verfahrens wird die Herstellung des Präpolymers (A) bei einem NCO-Index von >1,0 bis 20, bevorzugt von 1,5 bis 15, besonders bevorzugt von 2,0 bis 10 durchgeführt. Hierbei entspricht der NCO-Index dem Verhältnis der freien NCO-Gruppen des Polyisocyanats (B) zu den NCO-reaktiven Gruppen der Isocyanatgruppen-reaktive Verbindung (B) und der Hydroxylgruppen des C-C Doppelbindungshaltigen Monoalkohols.

### Komponente (D)

Erfindungsgemäß ist die Komponente (D) ein C-C Doppelbindungshaltiger Monoalkohol mit mindestens 8, bevorzugt mindestens 10, besonders bevorzugt mindestens 12 Kohlenstoffatomen im Molekül, wobei der C-C Doppelbindungshaltige Monoalkohol auch als ungesättigter Fettsäurealkohol bezeichnet werden kann.

In einer Ausführungsform des erfindungsgemäßen Verfahrens hat der C-C Doppelbindungshaltige Monoalkohol der Komponente (D) maximal 28, bevorzugt maximal 24 und besonders bevorzugt maximal 22 Kohlenstoffatome im Molekül.

In einer bevorzugten Ausführungsform des erfindungsgemäßen Verfahrens hat der C-C Doppelbindungshaltige Monoalkohol der Komponente (D) von 8 bis 28, bevorzugt von 10 bis 24 und besonders bevorzugt von 12 bis 22 Kohlenstoffatome im Molekül. Cis-9-Octadecen-1-ol (Oleylalkohol) hat beispielsweise die Summenformel C₁₈H₃₆O als Summenformel und 18 Kohlenstoffatome im Molekül.

In einer Ausführungsform des erfindungsgemäßen Verfahrens ist die Komponente (D) eine oder mehrere Verbindungen und wird ausgewählt aus der Gruppe bestehend aus cis-9-Hexadecen-1-ol (cis-9-Octadecen-1-ol), cis-9-Octadecen-1-ol (Oleylalkohol), trans-9-Octadecen-1-ol (Elaidylalkohol), cis-11-Octadecen-1-ol, cis,cis-9,12-Octadecadien-1-ol (Linoleylalkohol) und 6,9,12-Octadecatrien-1-ol (γ-Linolenylalkohol) bevorzugt cis-9-Hexadecen-1-ol (cis-9-Octadecen-1-ol) und cis-9-Octadecen-1-ol (Oleylalkohol) und besonders bevorzugt cis-9-Octadecen-1-ol (Oleylalkohol).

In einer Ausführungsform des erfindungsgemäßen Verfahrens sind die C-C Doppelbindungen des Monoalkohols der Komponente (D) cis-ständige C-C Doppelbindungen. Beispiele für Monoalkohole mit cis-ständigen C-C Doppelbindungen sind cis-9-Hexadecen-1-ol (cis-9-Octadecen-1-ol) und cis-9-Octadecen-1-ol (Oleylalkohol). Hierbei sind cis-ständige C-C Doppelbindungen technisch vorteilhaft, da sie eine Tendenz zur Kristallisation des Präpolymers (A) reduzieren und somit den Schmelzpunkt reduzieren, was eine Verarbeitung bzw. Prozessierung des Präpolymers in Folgereaktionen erleichtert. In einer Ausführungsform des erfindungsgemäßen Verfahrens ist der berechnete Massenanteil der Komponente (D) von 5 Gew.-% bis 80 Gew.-%, bevorzugt von 10 Gew.-% bis 70 Gew.-% und besonders 20 Gew.-% bis 60 Gew.-% bezogen auf die Summe der eingesetzten Massen der Isocyanatgruppen-reaktiven Verbindung (B), bevorzugt des Polyetherpolyols (B-1), und der Komponente (D).

### H-funktionelle Starterverbindung (E)

In einer Ausfuhrungsform des erfindungsgemäßen Verfahrens ist die H-funktionelle Starterverbindung (E) eine oder mehrere Verbindungen und wird ausgewählt aus der Gruppe bestehend aus 1,2-Propandiol, Propylen¬glykol, Ethylen¬glykol, Diethylen¬glykol, Dipropylenglykol, 1,2-Butan-diol, 1,3-Bu¬tan¬diol, 1,4-Butan-diol, Hexandiol, Pentan¬diol, 3-Methyl-1,5-pentandiol, Glycerin, Tri¬methylol¬propan, Pentaerythrit, Sorbit, Saccharose, Hydro¬chinon, Brenz,catechin, Resorcin, und 1,3,5-Tri¬hydroxy¬benzol, bevorzugt 1,2-Propandiol, Propylen-glykol, Ethylen-glykol, Diethylen-glykol, Dipropylenglykol, 1,2-Butan-diol, 1,3-Bu¬tan¬diol, 1,4-Butan-diol, Hexandiol, Pentan-diol, 3-und Methyl-1,5-pentandiol.

In einer Ausfuhrungsform des erfindungsgemäßen Verfahrens weist die H-funktionelle Starterverbindung (E) eine berechnete Funktionalität von 2 bis 8, bevorzugt von 2 bis 6 und besonders bevorzugt von 2 bis 4 auf.

### Alkylenoxid (F)

In einer Ausfuhrungsform des erfindungsgemäßen Verfahrens ist das Alkylenoxid (F) Propylenoxid und/oder Ethylenoxid, bevorzugt Propylenoxid.

### Katalysator (G)

In einer Ausfuhrungsform des erfindungsgemäßen Verfahrens ist der Katalysator (G) ein basischer Katalysator, bevorzugt ein Alkalmetallhydroxid wie Lithiumhydroxid, Kaliumhydroxid oder Natriumhydroxid, bevorzugt Kaliumhydroxid.

### Adhäsivfilm (H)

Ein weiterer Gegenstand der Erfindung ist ein Verfahren zur Herstellung eines Adhäsivfilms (H) umfassend der Umsetzung
a) des Präpolymers (A) erhalten nach dem erfindungsgemäßen Verfahren oder des Präpolymers (A) erhältlich nach dem erfindungsgemäßen Verfahren mit
b) einer Isocyanatgruppen reaktive Verbindung (I)
c) in Gegenwart eines Katalysators (J)
d) optional in Gegenwart von Hilfsstoffen (K).

Ebenfalls ist ein Adhäsivfilm (H) erhältlich nach dem erfindungsgemäßen Verfahren Gegenstand der Erfindung.

In einer Ausfuhrungsform des erfindungsgemäßen Verfahrens wird die Herstellung eines Adhäsivfilms (H) bei einem NCO-Index von weniger als 1,0, bevorzugt von 0,3 bis 0,8 und besonders bevorzugt im Bereich von 0,4 bis 0,7 durchgeführt.

### Isocyanatgruppen reaktive Verbindung (I)

In einer Ausfuhrungsform des erfindungsgemäßen Verfahrens ist die Isocyanatgruppen-reaktive Verbindung (I) ein Polyetherpolyol (I-1), ein Polyetheresterpolyol (I-2), ein Polyesterpolyol (I-3) und/oder ein XXX, bevorzugt ein Polyetherpolyol (I-1). Das Polyetherpolyol (I-1) ist aufgrund der verbesserten Atmungsaktivität der resultierenden Adhäsivschicht (H) bzw. des Pflastermaterial (P) technisch vorteilhaft.

In einer Ausfuhrungsform des erfindungsgemäßen Verfahrens hat die Isocyanatgruppen-reaktive Verbindung (I), bevorzugt das Polyetherpolyol (I-1) eine Molmasse von 2 g/mol bis 2500 g/mol, wobei die Molmasse mittels der Experimentalteil offenbarten Methode bestimmt wurde.

In einer Ausfuhrungsform des erfindungsgemäßen Verfahrens hat die Isocyanatgruppen-reaktive Verbindung (I), bevorzugt das Polyetherpolyol (I-1) eine berechnete Funktionalität mehr als 2 bis 8, bevorzugt von 3 bis 6 und besonders bevorzugt von 3,5 bis 6.

### Polyetherpolyol (I-1)

In einer Ausfuhrungsform des erfindungsgemäßen Verfahrens ist die Isocyanatgruppen-reaktive Verbindung (I) ein Polyetherpolyol (I-1), wobei das Polyetherpolyol (I-1) aufgrund der verbesserten Atmungsaktivität der resultierenden Adhäsivschicht (H) bzw. des Pflastermaterial (P) ist.

In einer bevorzugten Ausfuhrungsform des erfindungsgemäßen Verfahrens ist die Isocyanatgruppen-reaktive Verbindung (I) das Polyetherpolyol (I-1) und das Polyetherpyolyol (I-1) ist erhältlich durch Umsetzung einer H-funktionellen Starterverbindung (L) mit einem Alkylenoxid (M) in Gegenwart eines Katalysators (N).

In einer bevorzugten Ausfuhrungsform des erfindungsgemäßen Verfahrens umfasst die Herstellung des Polyetherpolyols (I-1) folgende Schritte:
I) Umsetzung der H-funktionellen Starterverbindung (L) mit einer ersten Teilmenge des Alkylenoxids (M) in Gegenwart des Katalysators (N), bevorzugt des Alkalimetallmetallhydroxids unter Bildung eines Intermediats (O),
II) Umsetzung des Intermediats (O) mit einer zweiten Teilmenge des Alkylenoxids (M),

wobei die erste Teilmenge Propylenoxid oder eine Propylenoxid-Ethylenoxid-Mischung, bevorzugt Propylenoxid ist,
wobei die zweite Teilmenge Ethylenoxid oder eine Propylenoxid-Ethylenoxid-Mischung, bevorzugt Ethylenoxid ist,
und wobei die erste Teilmenge des Alkylenoxids 70 Gew.-% bis 90 Gew.-% bezogen auf die Summe aus der ersten und zweiten Teilmenge des Alkylenoxids (M) ist.

### Polyetheresterpolyol (I-2)

In einer alternativen, weniger bevorzugten Ausfuhrungsform des erfindungsgemäßen Verfahrens ist die Isocyanatgruppen-reaktive Verbindung (I) ein Polyetheresterpolyol (I-2), wobei das Polyetheresterpolyol (I-2) erhältlich ist durch Umsetzung einer H-funktionellen Starterverbindung (L) mit einem Alkylenoxid (M) in Gegenwart eines Katalysators (N) in Gegenwart einer Polycarbonsäure oder eines cyclischen Carbonsäureanhydrids wie Bernsteinsäureanhydrid oder Maleinsäureanhydrid.

### Polyesterpolyol (I-3)

In einer dritten, weniger bevorzugten Ausfuhrungsform des erfindungsgemäßen Verfahrens ist die Isocyanatgruppen-reaktive Verbindung (I) ein Polyesterpolyol (I-3), wobei das Polyesterpolyol (I-3) erhältlich ist durch Umsetzung einer organischen Dicarbonsäure und/oder eines cyclischen Carbonsäureanhydrids mitmehrwertigen Alkoholen, vorzugs¬weise Diolen nach für dem Fachmann bekannten Verfahren Polykondensations- oder Polyadditionsreaktionen hergestellt werden.

### Katalysator (J)

Als Katalysatoren (J) eignen sich solche der in der Polyurethanchemie an sich bekannten Art, z.B. tertiäre Amine, wie Triethylamin, N-Tetramethylethylendiamin, 1,4-Diaza-bicyclo-(2,2,2)-octan, N,N-Dimethylbenzylamin, N-Methyl-N'-dimethylaminoethyl- piperazin, Pentamethyldiethylentriamin, oder auch als Katalysatoren bekannte Mannichbasen aus sekundären Aminen, wie Dimethylamin und Aldehyden (Formaldehyd) oder Ketonen (Aceton) und Phenolen in Frage, ferner Silaamine mit Kohlenstoff-Silicium-Bindungen, z.B. 2,2,4-Trimethyl-2-silamorpholin und 1,3-Diethylamino-methyl-tetramethyl-disiloxan. Erfindungsgemäß kommen auch organische Metallverbindungen, insbesondere organische Bismuth- Zinn-, Zink- oder Eisenverbindungen als Katalysatoren verwendet werden. Biespielhaft für organische Zinnverbindungen sind Zinn-(II)-acetat, Zinn-(II)-ethylhexoat und die Zinn-(IV)-Verbindungen, z.B. Dibutylzinndichlorid, Dibutylzinndilaurat, Dibutylzinnmaleat.

Daneben sind auch organische Bismutverbindungen wie lösliche Bismut-(III)-Carboxylate auf Basis linearer, verzweigter, gesättigter oder ungesättigter Carbonsäuren mit 2 bis 18, vorzugsweise 6 bis 18 C-Atomen geeignet. Bevorzugt sind Bismut-(III)-Salze verzweigter gesättigter Carbonsäuren mit tertiären Carboxylgruppen, wie der 2,2- Dimethyl-Oktansäure (Bismutneodecanoat).

In einer Ausführungsform des erfindungsgemäßen Verfahrens wird der Katalysator (J) in Mengen von 0,01 bis 0,3, insbesondere 0,03 bis 0,15 Gew -% bezogen auf die Isocyanatgruppen reaktive Verbindung (I), bevorzugt das Polyetherpolyol (I-1) eingesetzt.

### Hilfsstoffe (K)

In einer Ausführungsform des erfindungsgemäßen Verfahrens können Hilfsstoffe (K) wie beispielsweise Antioxidantien, Füllstoffe, Farbstoffe, Verdickungsmitel, Streckmittel, Harze zugegeben werden.

Als Antioxidantien (Stabilisatoren) kommen für den erfindungsgemäßen Adhäsivfilm (H) insbesondere sterisch gehinderte phenolische Stabilisatoren, wie BHT (2,6-Di-tert.-butyl-4-methylphenol), Vulkanox BKF (2,2 - Methylen-bis-(6-tert.-butyl-4-methyl-phenol), Irganox 1010 (Pentaerythrityl-tetrakis-[3-(3,5-ditert.-butyl-4-hydroxyphenyl)propionat, Irganox 1076 (Octadecyl-3-(3,5-ditert.-butyl-4-hydroxyphenyl)propionat), Irganox 1135(Benzenepropansäure, 3,5-bis (1,1-dimethyl-ethyl)-4-hydroxy-C7-C9 vertzweigte Alkylester), Irganox 1330 (1 ,3,5-trimethyl-2,4,6-tris(3 ',5 ' -di-tert-butyl-4' -hdroxybenzyl)benzol, Irganox 1520 (2-methyl-4,6-bis[(octylthio)methyl]phenol) und/oder Tocopherole in Betracht. Bevorzugt werden solche vom Typ α-Tocopherol (Vitamin E) eingesetzt. Weitere Stabilisatoren sind beispielsweise in Ullmann (Vol. A3, S. 91-11 1 ; Vol. A20, S. 461-479; Vol. A23, 381-391) genannt.

Die Stabilisierungseigenschaften der phenolischen Stabilisatoren können durch Zusatz von organisch substituierten Sulfiden oder Disulfiden, wie z.B. Irganox PS800 (3,3 - Thiodipropionsäuredilaurylester) oder Dioctyldidecyldisulfid, noch verbessert werden. Auch Kombinationen der phenolischen Typen untereinander sind möglich.

Durch den Zusatz der aufgeführten Stabilisatoren wird insbesondere ermöglicht, aus den erfindungsgemäßen Adhäsivfilm (H) Produkte herzustellen, die auch mittels einer energiereichen γ-Strahlung sterilisiert werden können. Dies ist insbesondere in der Herstellung von medizinischen Artikeln, wie zum Beispiel Wundversorgungsprodukten (u.a. Wundschnellverbände, Pflaster oder Tamponaden), von hervorragender Bedeutung.

Die Antioxidantien werden bevorzugt in Mengen von 0,15 bis 5 Gew.-%, insbesondere 0,2 bis 2,0 Gew.-%, bezogen auf die Isocyanatgruppen reaktive Verbindung (I), bevorzugt das Polyetherpolyol (I-1) eingesetzt. Bei Antioxidantsgemischen, wie sie oben erwähnt sind, werden die Antioxidantien bevorzugt in Mengen von 0,05 bis 0,5 Gew -% je Einzelsubstanz, bezogen auf die Isocyanatgruppen reaktive Verbindung (I), bevorzugt das Polyetherpolyol (I-1), eingesetzt.

Erfindungsgemäß können dem Adhäsivfilm (H) die für Polyurethane üblichen Zusatzstoffe, wie Füllstoffe, Farbstoffe, Verdickungsmitel, Streckmittel, Harze etc., zugesetzt werden, bevorzugt bis zu 100 Gew.-%, besonders bevorzugt bis zu 20 Gew.-% und besonders bevorzugt bis zu 10 Gew.-% bezogen auf die die Isocyanatgruppen reaktive Verbindung (I), bevorzugt das Polyetherpolyol (I-1). Als Füllstoffe werden aus der Polyurethan-Chemie an sich bekannte Zusatzstoffe verwendet, wie z.B. Kurzfasern auf anorganischer oder organischer Basis. Als anorganische Füllstoffe seien insbesondere genannt Pulver aus Zinkoxid und Titandioxid sowie Kurzfasern, wie Glasfasern von 0, 1 -1 mm Länge. An organischen Füllstoffen seien insbesondere aufgeführt quellfähige Pulver und Fasern mit einer Faserlänge > 0,01 mm, z.B. Fasern auf Basis von Polyacrylsäuren und deren Salzen oder anderen, wie sie beispielsweise in Absorbent Polymer Technology (BrannonPeppas, Harland, ELSEVIER, Amsterdam-Oxford-New York-Tokyo, 1990, S. 9-22) genannt sind, sowie als Textilfasern eingesetzte Materialien, wie z.B. Polyester oder Polyamidfasern. Als Farbstoffe oder Farbpigmente sind insbesondere solche zu verstehen, wie sie in Lebensmitteln, Verpackungen oder Kosmetika eingesetzt werden. Flüssige Streckmittel oder Harze sind insbesondere polymere Vinylverbindungen, Polyacrylate und sonstige in der Klebstofftechnik üblichen Copolymere, die Hafteigenschaften beeinflussen können.

### H-funktionelle Starterverbindung (L)

In einer Ausführungsform des erfindungsgemäßen Verfahrens hat die H-funktionelle Starterverbindung (L) eine berechnete Funktionalität von mehr als 2 bis 8, bevorzugt von 3 bis 6 und besonders bevorzugt von 3,5 bis 6.

In einer Ausführungsform des erfindungsgemäßen Verfahrens ist die H-funktionelle Starterverbindung (L) eine oder mehrere Verbindungen und wird ausgewählt aus der Gruppe bestehend aus Sorbit, Saccharose, Glycerol, Trimethylolpropan und Pentaerythritol, bevorzugt Glycerol, Trimethylolpropan und Pentaerythritol.

### Alkylenoxid (M)

In einer Ausführungsform des erfindungsgemäßen Verfahrens ist das Alkylenoxid (M) Ethylenoxid und/oder Propylenoxid.

### Katalysator (N)

In einer Ausführungsform des erfindungsgemäßen Verfahrens ist der Katalysator (N) ein basischer Katalysator, bevorzugt ein Alkalmetallhydroxid wie Lithiumhydroxid, Kaliumhydroxid oder Natriumhydroxid, bevorzugt Kaliumhydroxid.

### Pflastermaterial (P)

Ein weiterer Gegenstand der Erfindung ist ein Verfahren zur Herstellung eines Pflastermaterials (P) umfassend des Auftragens des Adhäsivfilms (H) erhalten nach dem erfindungsgemäßen Verfahren oder des erfindungsgemäßen Präpolymers (A) auf ein Tägermaterial (Q).

Ein weiterer Gegenstand der Erfindung ist ein Pflastermaterial (P) erhältlich nach dem erfindungsgemäßen Verfahren.

### Trägermaterial (Q)

In einer Ausführungsform des erfindungsgemäßen Verfahrens besteht das Trägermaterial (Q) aus einer Kunststoffolie auf Basis von z. B. Polyurethan (PUR) oder Polyvinylchorid (PVC), aus einer Schaumfolie auf Basis von z. B. PVC, PUR oder Polyethylen oder vorzugsweise textilen Faservliesen auf Basis von z. B. Viskosefasern sowie Geweben auf Basis von z. B. Kunstseide oder Stretchgewirken auf Basis von z. B. PUR/Polyamid-Garngemischen.

In einer ersten Ausführungsform betrifft die Erfindung ein Verfahren zur Herstellung eines Isocyanat-terminierten Präpolymers (A) umfassend der Umsetzung einer die Isocyanatgruppen-reaktiven Verbindung (B) mit einem Polyisocyanat (C) und einer Komponente (D), wobei die Komponente (D) ein C-C Doppelbindungshaltiger Monoalkohol mit mindestens 8, bevorzugt mindestens 10, besonders bevorzugt mindestens 12 Kohlenstoffatomen im Molekül ist.

In einer zweiten Ausfuhrungsform betrifft die Erfindung ein Verfahren gemäß der ersten Ausführungsform, wobei das Präpolymer (A) einen C-C Doppelbindungsgehalt von 0,2 Gew.-% bis 3,9 Gew.-%, bevorzugt von 0,5 Gew.-% bis 3,4 Gew.-% und besonders bevorzugt von 1,0 Gew.-% bis 2,9 Gew.-% hat, wobei der Gewichtsanteil des Doppelbindungsgehalts das Verhältnis der -CH=CH-Doppelbindungseinheit(en) (26 g/mol) bezogen auf das Molekülgewicht des Präpolymers (A) ist und mittels der dem Fachmann bekannten Protonen-Resonanzspektroskopie experimentell ermittelt werden kann

In einer dritten Ausführungsform betrifft die Erfindung ein Verfahren gemäß der ersten oder zweiten Ausführungsform, wobei das Präpolymer (A) einen Isocyanatanteil von 1 Gew.-% bis 30 Gew.-%, bevorzugt von 5 Gew.-% bis 25 Gew.-%., besonders bevorzugt 7 Gew.-% bis 20 Gew.-% hat.

In einer vierten Ausführungsform betrifft die Erfindung ein Verfahren gemäß einer der ersten bis dritten Ausführungsform, wobei die Isocyanatgruppen-reaktive Verbindung (B) ein Polyetherpolyol (B-1), ein Polyetheresterpolyol (B-2) und/oder ein Polyesterpolyol (B-3), bevorzugt ein Polyetherpolyol (B-1) ist.

In einer fünften Ausführungsform betrifft die Erfindung ein Verfahren gemäß einer der ersten bis vierten Ausführungsform, wobei die Isocyanatgruppen-reaktive Verbindung (B), bevorzugt das Polyetherpolyol (B-1) eine berechnete Funktionalität von 2 bis 8, bevorzugt von 2 bis 6 und besonders bevorzugt von 2 bis 4 aufweist.

In einer sechsten Ausführungsform betrifft die Erfindung ein Verfahren gemäß einer der ersten bis fünften Ausführungsform, wobei die Isocyanatgruppen-reaktive Verbindung (B) das Polyetherpolyol (B-1) und das Polyetherpolyol (B-1) ist erhältlich durch Umsetzung einer H-funktionellen Starterverbindung (E) mit einem Alkylenoxid (F) in Gegenwart eines Katalysators (G), bevorzugt eines basischen Katalysators.

In einer siebten Ausführungsform betrifft die Erfindung ein Verfahren gemäß einer der ersten bis sechsten Ausführungsform, wobei die Isocyanatgruppen-reaktive Verbindung (B) eine Molmasse von 2 g/mol bis 2500 g/mol, bevorzugt von 50 g/mol bis 1500 g/mol und besonders bevorzugt von 100 g/mol bis 1000 g/mol hat, wobei die Molmasse mittels der Experimentalteil offenbarten Methode bestimmt wurde.

In einer achten Ausführungsform betrifft die Erfindung ein Verfahren gemäß einer der ersten bis siebten Ausführungsform, wobei das Polyiscyanat (C) mindestens eine Verbindung mit einer Molmasse von 140 g/mol bis 600 g/mol enthaltend aliphatische, cycloaliphatische, araliphatische und/oder aromatisch gebundene Isocyanatgruppen.

In einer neunten Ausfuhrungsform betrifft die Erfindung ein Verfahren gemäß einer der ersten bis achten Ausführungsform, wobei das Polyisocyanat (C) eine oder mehrere Verbindungen ist und ausgewählt wird aus der Gruppe bestehend aus 1,5-Diisocyanatopentan (Pentamethylendiisocyanat, PDI), 1,6-Diisocyanatohexan (Hexamethylendiisocyanat, HDI), 1-Isocyanato-3,3,5-trimethyl-5-isocyanatomethylcyclohexan (Isophorondiisocyanat, IPDI), 2,4'- and 4,4'-Diisocyanatodicyclohexylmethane (H12-MDI), und 1,3- und 1,4-bis(isocyanatomethyl)benzen (Xylylendiisocyanat, XDI), 1,3- und 1,4-bis(2-isocyanatopropan-2-yl)benzen (tetramethylxylylendiisocyanat, TMXDI), 2,2`-, 2,4'- and 4,4'-Diisocyanatodiphenylmethan (MDI), 3,3'-Dimethyl diphenylmethan-4,4'-diisocyanat, 4,4'-Diisocyanatodiphenylethan, 1,5-Diisocyanatonaphthalene (NDI), bevorzugt 1,5-Diisocyanatopentan (Pentamethylendiisocyanat, PDI) und/oder 1,6-Diisocyanatohexan (Hexamethylendiisocyanat, HDI) und besonders bevorzugt 1,6-Diisocyanatohexan (Hexamethylendiisocyanat, HDI).

In einer zehnten Ausfuhrungsform betrifft die Erfindung ein Verfahren gemäß einer der ersten bis neunten Ausführungsform, wobei die Herstellung des Präpolymers (A) bei einem NCO-Index von >1,0 bis 20, bevorzugt von 1,5 bis 15, besonders bevorzugt von 2,0 bis 10 durchgeführt wird.

In einer elften Ausfuhrungsform betrifft die Erfindung ein Verfahren gemäß einer der ersten bis zehnten Ausführungsform, wobei der C-C Doppelbindungshaltige Monoalkohol der Komponente (D) maximal 28, bevorzugt maximal 24 und besonders bevorzugt maximal 22 Kohlenstoffatome im Molekül hat.

In einer zwölften Ausführungsform betrifft die Erfindung ein Verfahren gemäß einer der ersten bis elften Ausführungsform, wobei der C-C Doppelbindungshaltige Monoalkohol der Komponente (D) von 8 bis 28, bevorzugt von 10 bis 24 und besonders bevorzugt von 12 bis 22 Kohlenstoffatome im Molekül hat.

In einer dreizehnten Ausführungsform betrifft die Erfindung ein Verfahren gemäß einer der ersten bis zwölften Ausführungsform, wobei der C-C Doppelbindungshaltige Monoalkohol der Komponente (D) eine oder mehrere Verbindungen ist und ausgewählt wird aus der Gruppe bestehend aus cis-9-Hexadecen-1-ol, cis-9-Octadecen-1-ol, trans-9-Octadecen-1-ol, cis-11-Octadecen-1-ol, cis,cis-9,12-Octadecadien-1-ol und 6,9,12-Octadecatrien-1-ol bevorzugt cis-9-Hexadecen-1-ol und cis-9-Octadecen-1-ol und besonders bevorzugt cis-9-Octadecen-1-ol.

In einer vierzehnten Ausführungsform betrifft die Erfindung ein Verfahren gemäß einer der ersten bis dreizehnten Ausführungsform, wobei die C-C Doppelbindungen des Monoalkohols der Komponente (D) cis-ständige C-C Doppelbindungen sind.

In einer fünfzehnten Ausführungsform betrifft die Erfindung ein Verfahren gemäß einer der ersten bis vierzehnten Ausführungsform, wobei der berechnete Massenanteil der Komponente (D) von 5 Gew.-% bis 80 Gew.-%, bevorzugt von 10 Gew.-% bis 70 Gew.-% und besonders 20 Gew.-% bis 60 Gew.-% bezogen auf die Summe der eingesetzten Massen der Isocyanatgruppen-reaktiven Verbindung (B), bevorzugt des Polyetherpolyols (B-1), und der Komponente (D) ist.

In einer fünfzehnten Ausführungsform betrifft die Erfindung ein Verfahren gemäß einer der sechsten bis vierzehnten Ausführungsform, wobei die H-funktionelle Starterverbindung (E) eine oder mehrere Verbindungen ist und ausgewählt wird aus der Gruppe bestehend aus 1,2-Propandiol, Propylen-glykol, Ethylen-glykol, Diethylen¬glykol, Dipropylenglykol, 1,2-Butan-diol, 1,3-Bu¬tan¬diol, 1,4-Butan-diol, Hexandiol, Pentan¬diol, 3-Methyl-1,5-pentandiol, Glycerin, Tri¬methylol¬propan, Pentaerythrit, Sorbit, Saccharose, Hydro¬chinon, Brenz,catechin, Resorcin, und 1,3,5-Tri¬hydroxy¬benzol, bevorzugt 1,2-Propandiol, Propylen-glykol, Ethylen-glykol, Diethylen¬glykol, Dipropylenglykol, 1,2-Butan-diol, 1,3-Bu¬tan¬diol, 1,4-Butan¬diol, Hexandiol, Pentan¬diol, 3-und Methyl-1,5-pentandiol.

In einer sechzehnten Ausfuhrungsform betrifft die Erfindung ein Verfahren gemäß einer der sechsten bis vierzehnten Ausführungsform, wobei die H-funktionelle Starterverbindung (E) eine berechnete Funktionalität von 2 bis 8, bevorzugt von 2 bis 6 und besonders bevorzugt von 2 bis 4 aufweist.

In einer siebzehnten Ausfuhrungsform betrifft die Erfindung ein Verfahren gemäß einer der ersten bis sechzehnten Ausführungsform, wobei das Alkylenoxid (F) Propylenoxid und/oder Ethylenoxid, bevorzugt Propylenoxid ist.

In einer achtzehnten Ausführungsform betrifft die Erfindung ein Verfahren gemäß einer der sechsten bis achtzehnten Ausführungsform, wobei der der Katalysator (G) ein basischer Katalysator, bevorzugt ein Alkalmetallhydroxid wie Lithiumhydroxid, Kaliumhydroxid oder Natriumhydroxid, bevorzugt Kaliumhydroxid ist.

In einer neunzehnten Ausführungsform betrifft die Erfindung ein Isocyanat-terminiertes Präpolymer (A) erhältlich nach dem Verfahren gemäß einer der ersten bis achtzehnten Ausführungsform.

In einer zwanzigsten Ausführungsform betrifft die Erfindung ein Isocyanat-terminiertes Präpolymer (A) gemäß der neunzehnten mit einem berechneten C-C Doppelbindungsgehalt von 0,2 Gew.-% bis 3,9 Gew.-%, bevorzugt von 0,5 Gew.-% bis 3,4 Gew.-% und besonders bevorzugt von 1,0 Gew.-% bis 2,9 Gew.-%,

In einer einundzwanzigsten Ausführungsform betrifft die Erfindung ein Isocyanat-terminiertes Präpolymer (A) gemäß der neunzehnten oder zwanzigsten Ausführungsform mit einem berechneten Isocyanatanteil von 1 Gew.-% bis 30 Gew.-%, bevorzugt von 5 Gew.-% bis 25 Gew.-%., besonders bevorzugt 7 Gew.-% bis 20 Gew.-%..

In einer zweiundzwanzigsten Ausführungsform betrifft die Erfindung ein Isocyanat-terminiertes Präpolymer (A) gemäß einer der neunzehnten bis einundzwanzigsten Ausführungsform, wobei das Isocyanat-terminierte Präpolymer (A) eine Viskosität von 10 mPa·s bis 5000 mPa·s, bevorzugt von 100 mPa·s bis 2000 mPa·s aufweist, wobei die Viskosität nach DIN 53019 bei 23°C und einer Scherrate von 50/s bestimmt wurde.

In einer dreiundzwanzigsten Ausfuhrungsform betrifft die Erfindung ein Verfahren zur Herstellung eines Adhäsivfilms (H) umfassend der Umsetzung
a) des Präpolymers (A) erhalten nach dem Verfahren gemäß einer der ersten bis achtzehnten Ausfuhrungsform oder des Präpolymers (A) gemäß einer der neunzehnten bis zweiundzwanzigsten Ausfuhrungsform mit
b) einer Isocyanatgruppen reaktive Verbindung (I)
c) in Gegenwart eines Katalysators (J)
d) optional in Gegenwart von Hilfsstoffen (K).

In einer vierundzwanzigsten Ausfuhrungsform betrifft die Erfindung ein Verfahren gemäß der dreiundzwanzigsten Ausführungsform, wobei die Herstellung eines Adhäsivfilms (H) bei einem NCO-Index von weniger als 1,0, bevorzugt von 0,3 bis 0,8 und besonders bevorzugt im Bereich von 0,4 bis 0,7 durchgeführt wird.

In einer fünfundzwanzigsten Ausfuhrungsform betrifft die Erfindung ein Verfahren gemäß der dreiundzwanzigsten oder vierundzwanzigsten Ausführungsform, wobei die Isocyanatgruppen-reaktive Verbindung (I) ein Polyetherpolyol (I-1), ein Polyetheresterpolyol (I-2), ein Polyesterpolyol (I-3) und/oder ein XXX, bevorzugt ein Polyetherpolyol (I-1) ist.

In einer sechsundzwanzigsten Ausfuhrungsform betrifft die Erfindung ein Verfahren gemäß einer der dreiundzwanzigsten bis fünfundzwanzigsten Ausführungsform, wobei die Isocyanatgruppen-reaktive Verbindung (I), bevorzugt das Polyetherpolyol (I-1) eine Molmasse von 2 g/mol bis 2500 g/mol, wobei die Molmasse mittels der Experimentalteil offenbarten Methode bestimmt wurde.

In einer siebenundzwanzigsten Ausfuhrungsform betrifft die Erfindung ein Verfahren gemäß einer der dreiundzwanzigsten bis sechsundzwanzigsten Ausführungsfonn, wobei die Isocyanatgruppen-reaktive Verbindung (I), bevorzugt das Polyetherpolyol (I-1) eine berechnete Funktionalität mehr als 2 bis 8, bevorzugt von 3 bis 6 und besonders bevorzugt von 3,5 bis 6.

In einer achtundzwanzigsten Ausfuhrungsform betrifft die Erfindung ein Verfahren gemäß einer der dreiundzwanzigsten bis siebenundzwanzigsten Ausführungsform, wobei die Isocyanatgruppen-reaktive Verbindung (I) ein Polyetherpolyol (I-1) ist und das Polyetherpyolyol (I-1) erhältlich ist durch Umsetzung einer H-funktionellen Starterverbindung (L) mit einem Alkylenoxid (M) in Gegenwart eines Katalysators (N).

In einer neunundzwanzigsten Ausfuhrungsform betrifft die Erfindung ein Verfahren gemäß einer der dreiundzwanzigsten bis achtundzwanzigsten Ausführungsfonn, wobei die Herstellung des Polyetherpolyols (I-1) folgende Schritte umfasst:
I) Umsetzung der H-funktionellen Starterverbindung (L) mit einer ersten Teilmenge des Alkylenoxids (M) in Gegenwart des Katalysators (N), bevorzugt des Alkalimetallmetallhydroxids unter Bildung eines Intermediats (O),
II) Umsetzung des Intermediats (O) mit einer zweiten Teilmenge des Alkylenoxids (M),

wobei die erste Teilmenge Propylenoxid oder eine Propylenoxid-Ethylenoxid-Mischung, bevorzugt Propylenoxid ist,
wobei die zweite Teilmenge Ethylenoxid oder eine Propylenoxid-Ethylenoxid-Mischung, bevorzugt Ethylenoxid ist,
und wobei die erste Teilmenge des Alkylenoxids 70 Gew.-% bis 90 Gew.-% bezogen auf die Summe aus der ersten und zweiten Teilmenge des Alkylenoxids (M) ist.

In einer dreißigsten Ausfuhrungsform betrifft die Erfindung ein Verfahren gemäß der neunundzwanzigsten Ausführungsform, wobei die H-funktionelle Starterverbindung (L) eine berechnete Funktionalität von mehr als 2 bis 8, bevorzugt von 3 bis 6 und besonders bevorzugt von 3,5 bis 6 hat.

In einer einunddreißigsten Ausfuhrungsform betrifft die Erfindung ein Verfahren gemäß der neunundzwanzigsten oder dreißigsten Ausführungsform, wobei die H-funktionelle Starterverbindung (L) eine oder mehrere Verbindungen ist und ausgewählt wird aus der Gruppe bestehend aus Sorbit, Saccharose, Glycerol, Trimethylolpropan und Pentaerythritol, bevorzugt Glycerol, Trimethylolpropan und Pentaerythritol.

In einer zweiunddreißigsten Ausfuhrungsform betrifft die Erfindung ein Verfahren gemäß einer der neunundzwanzigsten bis einunddreißigsten Ausführungsform, wobei der Katalysator (N) ein basischer Katalysator, bevorzugt ein Alkalmetallhydroxid wie Lithiumhydroxid, Kaliumhydroxid oder Natriumhydroxid, bevorzugt Kaliumhydroxid ist.

In einer dreiunddreißigsten Ausfuhrungsform betrifft die Erfindung ein Adhäsivfilm (H) erhältlich, nach dem Verfahren einer der dreiundzwanzigsten bis zweiunddreißigsten Ausführungsform.

In einer vierunddreißigsten Ausfuhrungsform betrifft die Erfindung ein Verfahren zur Herstellung eines Pflastermaterials (P) umfassend des Auftragens des Adhäsivfilms (H) erhalten nach dem Verfahren gemäß einer der dreiundzwanzigsten bis zweiunddreißigsten Ausführungsfonn oder des Präpolymers (A) gemäß der dreiunddreißigsten Ausfuhrungsform auf ein Tägermaterial (Q).

In einer fünfunddreißigsten Ausführungsform betrifft die Erfindung ein Verfahren gemäß der vierunddreißigsten Ausführungsform, wobei das Trägermaterial (Q) aus einer Kunststoffolie auf Basis von z. B. Polyurethan (PUR) oder Polyvinylchorid (PVC), aus einer Schaumfolie auf Basis von z. B. PVC, PUR oder Polyethylen oder vorzugsweise textilen Faservliesen auf Basis von z. B. Viskosefasern sowie Geweben auf Basis von z. B. Kunstseide oder Stretchgewirken auf Basis von z. B. PUR/Polyamid-Garngemischen besteht.

In einer sechsunddreißigsten Ausfuhrungsform betrifft die Erfindung ein Pflastermaterial (P) erhältlich nach dem Verfahren gemäß der vierunddreißigsten oder fünfunddreißigsten Ausführungsform.

In einer siebenunddreißigsten Ausfuhrungsform betrifft die Erfindung die Verwendung des Präpolymers (A) nach einem Verfahren gemäß einer der ersten bis achtzehnten Ausfuhrungsform oder des Präpolymers (A) gemäß einer der neunzehnten bis zweiundzwanzigsten Ausfuhrungsform zur Herstellung eines Adhäsivfilms (H) oder eines Formkörpers.

### Beispiele

### Eingesetzte Stoffe

### Polyisocyanat (C)

| | |
|---|---|
| Hexamethylendiisocyanat (HDI) | Desmodur H, Covestro Deutschland AG |

### Komponente (D)

| | |
|---|---|
| cis-9-Octadecen-1-ol | HD-Ocenol 90/95V, Pharchem |

### Isocyanatgruppen reaktive Verbindung (I)

| | |
|---|---|
| Polyol (I-1) | Polyetherpolyol basierend auf einer tetrafunktionellen Starterverbindung, Baymedix AR602, Covestro Deutschland AG, OH-Zahl 35 mgKOH/g |

### Katalysator (J)

| | |
|---|---|
| Bismutneodecanoat | Coscat 83, Dow Chemical |

### Hilfsstoffe (K)

| | |
|---|---|
| Irganox 1135 | Benzenepropansäure, 3,5-bis (1,1-dimethyl-ethyl)-4-hydroxy-C7-C9 vertzweigte Alkylester, BASF |
| Byk-378 | (Polyol-Mischung), Polyether modifiziertes Dimethylpolysiloxan |
| Tocopherol | 2H-1-Benzopyran-6-ol, Sigma Aldrich, |

### Charakterisierunssmethoden

### Viskositätsbestimmung

Die Viskosität wurde mittels Rotationsviskosimeter (Physica MCR 51, Hersteller: Anton Paar) nach der Vorschrift der DIN 53018 bei 23 °C und einer Scherrate von 50/s bestimmt.

### OH-Zahl

Die Bestimmung der OH-Zahlen erfolgte gemäß der Vorschrift der DIN 53240.

### Klimaschranktest

Auf 2 cm breite Metallstreifen wird ein grobporiger Schlagschaum mit einem doppelseitigen Klebeband befestigt. Der zu untersuchende Adhäsivfilm wird anschließend auf den Schlagschaum geklebt. Für eine Doppelbestimmung werden jeweils zwei vorbereitete Prüfkörper bei 23°C@50%rH (Trockenmessung) und 40°C@90%rH (Nassmessung) für 24 h gelagert. Anschließend wird die Kraft mittels einer Federwaage bei einer 180°-Schälung ermittelt. Die Kraft wird in N/20mm angegeben. Zur Ermittlung der Klebkraftabnahme im Nassen wird die Nass- und Trockenmessung ins Verhältnis gesetzt. Die Abnahme der Klebkraft liegt bei 50%.

### Herstellung der Präpolymere (A):

### Beispiel 1: Präpolymer 1 (erfindungsgemäß)

Es wurden 898,8 g Hexamethylendiisocyanat (HDI) bei 80 °C vorgelegt und innerhalb von 1 h ein Gemisch aus 176,8 g eines difunktionellen Polypropylenoxids mit einer Molmasse von 218 g/mol (OH-Zahl 515 mgKOH/g, gestartet auf 1,2-Propandiol) und 144,3 g cis-9-Octadecen-1-ol zugetropft. Anschließend wurde nachgerührt bis ein NCO-Gehalt von 29,5% erreicht wurde und 0,6 g Tocopherol zugegeben. Das überschüssige HDI wurde durch Kurzwegdestillation bei 130 °C im Vorverdampfer und 120 °C im Hauptverdampfer und einem Druck von 0,7 mbar entfernt. Man erhielt ein Präpolymer mit einem NCO-Gehalt von 11,7 % und einer Viskosität von 839 mPas.

### Beispiel 2: Präpolymer 2 (Vergleich)

NCO-terminiertes Präpolymer basierend auf Hexamethylendiisocyanat (HDI) und eines difunktionellen Polypropylenoxids mit einer Molmasse von 218 g/mol (OH-Zahl 515 mgKOH/g, gestartet auf 1,2-Propandiol), wobei das NCO-terminiertes Präpolymer einem NCO-Gehalt von 12.3 Gew.-% hat und unter dem Handelsnamen Baymedix AP501 vertrieben wird.

### Herstellung der Adhäsivfilme (H)

### Beispiel 3: Adhäsivfilmherstellung (erfindungsgemäß):

Zur Herstellung eines Masterbatches werden 100g Polyol (I-1), 2g Coscat 83 und 8g Irganox 1135 mittels eines Speedmixers für 30 Sekunden bei ein Rotationsgeschwindigkeit von 3500 min-1 vermischt. 5,5g der Masterbatchmischung werden mit weiteren 94,5g Polyol (I-1) und 1g Byk-378 (Polyol-Mischung) im Speedmixer gemischt. Bevor die Zugabe und Mischung im Speedmixer mit der Polyol-Mischung und 16,6g des Präpolymers (A) gemäß Beispiel 1 erfolgt, wird das Präpolymer (A) gemäß Beispiel 1 für 2 Stunden bei 80°C gelagert, um eine klare und transparente Flüssigkeit zu erhalten.

Nach dem Mischvorgang wird die Reaktivmischung auf einer Silikontrennpapier der Firma Cotek RB120/1 ausgegossen. Die Schichtdickeneinstellung erfolgt mittels einem 100µm Rakel. Die anschließende Kaschierung des Films erfolgt mit einem Platilon VPT9101 Film.

### Beispiel 4: Adhäsivfilmherstellung (Vergleich):

Zur Herstellung eines Masterbatches werden 100g Polyol (I-1), 2g Coscat 83 und 8g Irganox 1135 mittels eines Speedmixers für 30 Sekunden bei ein Rotationsgeschwindigkeit von 3500 min-1 vermischt. 5,5g der Masterbatchmischung werden mit weiteren 94,5g Polyol (I-1) und 1g Byk-378 (Polyol-Mischung) im Speedmixer gemischt. Zuletzt erfolgt die Zugabe von 9,9g des Präpolymers gemäß Vergleichsbeispiel 2 zur Polyol-Mischung mittels Speedmixer.

Nach dem Mischvorgang wird die Reaktivmischung auf einer Silikontrennpapier der Firma Cotek RB120/1 ausgegossen. Die Schichtdickeneinstellung erfolgt mittels einem 100µm Rakel. Die anschließende Kaschierung des Films erfolgt mit einem Platilon VPT9101 Film.

**Tabelle 1:**

| Adhäsivfilm (H) | Präpolymer (A) | Klimaschranktest Abnahme der Klebkraft [%] |
|---|---|---|
| 3 | 1 | 50 |
| 4 (Vergleich) | 2 | 100 |

Die Ergebnisse zeigen, dass unter Verwendung eines Adhäsivfilms (H) gemäß Beispiel 3, welcher unter Verwendung eines erfindungsgemäßen Präpolymers (A) gemäß Beispiel 1, die Abnahme der Klebekraft im Klimaschranktest deutlich geringer ist als unter Verwendung des Adhäsivfilms (H) gemäß Beispiel 4 auf Basis des nicht erfindungsgemäßen Präpolymers (A) gemäß Beispiel 2.

## Patentansprüche

1. Verfahren zur Herstellung eines Isocyanat-terminierten Präpolymers (A) umfassend der Umsetzung einer Isocyanatgruppen-reaktiven Verbindung (B) mit einem Polyisocyanat (C) und einer Komponente (D), wobei die Komponente (D) ein C-C Doppelbindungshaltiger Monoalkohol mit mindestens 8, bevorzugt mindestens 10 und besonders bevorzugt mindestens 12 Kohlenstoffatomen im Molekül ist.

2. Verfahren gemäß Anspruch 1, wobei der C-C Doppelbindungshaltiger Monoalkohol der Komponente (D) maximal 28, bevorzugt maximal 24 und besonders bevorzugt maximal 22 Kohlenstoffatome im Molekül hat.

3. Verfahren gemäß einem der Ansprüche 1 bis 6, wobei die Komponente (D) eine oder mehrere Verbindungen ist und ausgewählt wird aus der Gruppe bestehend aus cis-9-Hexadecen-1-ol, cis-9-Octadecen-1-ol, trans-9-Octadecen-1-ol, cis-11-Octadecen-1-ol, cis, cis-9,12-Octadecadien-1-ol und 6,9,12-Octadecatrien-1-ol bevorzugt cis-9-Hexadecen-1-ol und cis-9-Octadecen-1-ol und besonders bevorzugt cis-9-Octadecen-1-ol.

4. Verfahren gemäß einem der Ansprüche 1 bis 3, wobei die C-C Doppelbindungen des Monoalkohols der Komponente (D) cis-ständige C-C Doppelbindungen sind.

5. Verfahren gemäß einem der Ansprüche 1 bis 4, wobei der berechnete Massenanteil der Komponente (D) von 5 Gew.-% bis 80 Gew.-%, bevorzugt von 10 Gew.-% bis 70 Gew.-% und besonders 20 Gew.-% bis 60 Gew.-% bezogen auf die Summe der eingesetzten Massen der Isocyanatgruppen-reaktiven Verbindung (B), bevorzugt des Polyetherpolyols (B-1), und der Komponente (D) ist.

6. Isocyanat-terminiertes Präpolymer (A) erhältlich nach Verfahren gemäß einem der Ansprüche 1 bis 5.

7. Isocyanat-terminiertes Präpolymer (A) gemäß Anspruch 6 mit einem berechneten C-C Doppelbindungsgehalt von 0,2 Gew.-% bis 3,9 Gew.-%, bevorzugt von 0,5 Gew.-% bis 3,4 Gew.-% und besonders bevorzugt von 1,0 Gew.-% bis 2,9 Gew.-%.

8. Verfahren zur Herstellung eines Adhäsivfilms (H) umfassend der Umsetzung
a) des Präpolymers (A) erhalten nach dem Verfahren gemäß einem der Ansprüche 1 bis 5 oder des Präpolymers (A) gemäß Anspruch 6 oder 7 mit
b) einer Isocyanatgruppen reaktive Verbindung (I)
c) in Gegenwart eines Katalysators (J)
d) optional in Gegenwart von Hilfsstoffen (K)

9. Verfahren gemäß Anspruch 8, wobei die Isocyanatgruppen-reaktive Verbindung (I), bevorzugt das Polyetherpolyol (I-1) eine berechnete Funktionalität von mehr als 2 bis 8, bevorzugt von 3 bis 6 und besonders bevorzugt von 3,5 bis 6 hat.

10. Verfahren gemäß Anspruch 8 oder 9, wobei die Isocyanatgruppen-reaktive Verbindung (I) ein Polyetherpolyol (I-1) ist und das Polyetherpyolyol (I-1) erhältlich ist durch Umsetzung einer H-funktionellen Starterverbindung (L) mit einem Alkylenoxid (M) in Gegenwart eines Katalysators (N).

11. Verfahren gemäß einem der Ansprüche 8 bis 10, wobei die Herstellung des Polyetherpolyols (I-1) folgende Schritte umfasst:
I) Umsetzung der H-funktionellen Starterverbindung (L) mit einer ersten Teilmenge des Alkylenoxids (M) in Gegenwart des Katalysators (N), bevorzugt des Alkalimetallmetallhydroxids unter Bildung eines Intermediats (O),
II) Umsetzung des Intermediats (O) mit einer zweiten Teilmenge des Alkylenoxids (M),
wobei die erste Teilmenge Propylenoxid oder eine Propylenoxid-Ethylenoxid-Mischung, bevorzugt Propylenoxid ist,
wobei die zweite Teilmenge Ethylenoxid oder eine Propylenoxid-Ethylenoxid-Mischung, bevorzugt Ethylenoxid ist,
und wobei die erste Teilmenge des Alkylenoxids 70 Gew.-% bis 90 Gew.-% bezogen auf die Summe aus der ersten und zweiten Teilmenge des Alkylenoxids (M) ist.

12. Adhäsivfilm (H) erhältlich, bevorzugt nach dem Verfahren gemäß einem der Ansprüche 8 bis 11.

13. Verwendung des Präpolymers (A) erhalten nach dem Verfahren gemäß einem der Ansprüche 1 bis 5 oder des Präpolymers (A) gemäß Anspruch 6 oder 7 zur Herstellung eines Adhäsivfilms (H) oder eines Formkörpers.

14. Verfahren zur Herstellung eines Pflastermaterials (P) umfassend des Auftragens des Adhäsivfilms (H) erhalten nach dem Verfahren gemäß einem der Ansprüche 8 bis 11 oder des Präpolymers (A) gemäß Anspruch 12 auf ein Tägermaterial (Q).

15. Pflastermaterial (P) erhältlich nach dem Verfahren gemäß Anspruch 14.
